## Europäisches Patentamt
## European Patent Office
## Office européen des brevets

(19)

(11) Veröffentlichungsnummer: **0 013 916**
**A1**

(12)

# EUROPÄISCHE PATENTANMELDUNG

(21) Anmeldenummer: 80100130.6

(22) Anmeldetag: 11.01.80

(51) Int. Cl.³: **A 01 G 1/04**

(30) Priorität: 17.01.79 IT 1935279

(43) Veröffentlichungstag der Anmeldung: 06.08.80
Patentblatt 80/16

(84) Benannte Vertragsstaaten: **AT BE CH DE FR GB IT NL**

(71) Anmelder: **ICL s.p.A., Via Tiburtina, 1040, I-00156 Roma
(IT)**

(72) Erfinder: **Giovannozzi-Sermanni, Giovanni, Prof. Dr. agr.,
Via Parioli 2, I-00197 Roma (IT)**

(74) Vertreter: **Beszédes, Stephan G., Dr. et al, Am
Heideweg 2, Postfach 1168, D-8060 Dachau (DE)**

(54) **Verfahren zur Erzeugung von essbaren Pilzen.**

(57) Gegenstand der Erfindung ist ein Verfahren zur Erzeugung von eßbaren Pilzen durch Gären von Materialien pflanzlichen Ursprungs in Gegenwart von Mikroorganismen und Besäen derselben mit dem Myzel von eßbaren Pilzen zur Erzielung einer Pilzkultur, welches dadurch gekennzeichnet ist, daß die Pilzkultur vor der Differenzierung mit 1 oder mehr der Mikroorganismen Arthrobacter nicotianae, Arthrobacter globiformis und Arthrobacter simplex von der Arthrobactergattung behandelt wird.

EP 0 013 916 A1

ACTORUM AG

DR. STEPHAN G. BESZÉDES

PATENTANWALT

ZUGELASSENER VERTRETER
AUCH BEIM EUROPÄISCHEN PATENTAMT

PROFESSIONAL REPRESENTATIVE ALSO
BEFORE THE EUROPEAN PATENT OFFICE

8060 DACHAU BEI MÜNCHEN
POSTFACH 1168

MÜNCHENER STRASSE 80 A

Bundesrepublik Deutschland

TELEPHON: DACHAU 4371

Postscheckkonto München (BLZ 700 100 80)
Konto-Nr. 1 368 71
Bankkonto-Nr. 906 370 bei der Kreis- und Stadtsparkasse Dachau-Indersdorf (BLZ 700 515 40)
(VIA Bayerische Landesbank
Girozentrale. München)

0013916.

P 1 250 EU

- 1 -

B e s c h r e i b u n g

zur Patentanmeldung

I C L   S.p.A.

Roma, Italien

betreffend

Verfahren zur Erzeugung von eßbaren Pilzen

Die Erfindung betrifft ein neues Verfahren zur Erzeugung von eßbaren Pilzen, insbesondere Champignonpilzen. Im besonderen betrifft die Erfindung ein besseres
Verfahren zur Erzeugung von eßbaren Pilzen durch Gären
von Materialien pflanzlichen Ursprunges in Gegenwart
von Mikroorganismen und Besäen derselben mit dem Myzel

- 2 -

von eßbaren Pilzen, welches die Erzielung des gewünschten Produktes in höheren Ausbeuten als die bekannten Verfahren gestattet.

Die technische beziehungsweise industrielle Erzeugung von Edelpilzen beziehungsweise eßbaren Pilzen, welche insbesondere wegen der Qualität und Menge der in ihnen enthaltenen Proteinsubstanzen interessant sind, beruht auf der Verwertung von Materialien pflanzlichen Ursprunges, insbesondere landwirtschaftlichen Abfallprodukten, wie Stroh und allgemein Pflanzenrückständen, falls passend, durch stickstoffhaltige Substanzen ergänzt. Diese Mischungen werden mit wilden Mikroorganismen gären gelassen, sterilisiert und dann mit dem Myzel der zu erzeugenden eßbaren Pilze, unter welchen Agaricus bisporus und Pleurotus ostreatus bevorzugt verwendet werden, besät. Wenn das Myzel wächst, dringt es in die Cellulosemasse ein und dann wird der Differenziervorgang durch Änderung der Umgebungsbedingungen entweder durch eine schroffe Temperaturverminderung oder durch Bedecken der Myzelmasse mit einem inerten Material, wie Erde und/oder Torf, gefördert. Die Erzeugung von eßbaren Pilzen ist zunächst spärlich und erhöht sich fortschreitend, bis ein Maximum erreicht ist, worauf sie sich trotz der Gegenwart einer viel reicheren Cellulosemasse, welche verwertet werden könnte, vermindert und aufhört. Die Ausbeuten an eßbaren Pilzen lassen zu wünschen übrig.

Der Erfindung liegt die Aufgabe zugrunde, unter Behebung der Nachteile des Standes der Technik ein Verfahren zur Erzeugung von eßbaren Pilzen durch Gären von Materialien pflanzlichen Ursprunges in Gegenwart von Mikroorganismen und Besäen derselben mit dem Myzel von eßbaren Pilzen zur Erzielung einer Pilzkultur, durch welches bessere Ausbeuten an den eßbaren Pilzen erzielt werden können, zu schaffen.

Nun wurde überraschenderweise festgestellt, daß einige Mikroorganismen den Stoffwechsel der Lignocellulosemasse und der Myzelstoffwechselprodukte unter Förderung einer vollständigeren Verwertung des Cellulosesubstrates und Veranlassung eines rascheren und ansehnlicheren Differenziervorganges günstig zu beeinflussen vermögen.

Im besonderen wurde überraschenderweise festgestellt, daß die der Gattung Arthrobacter angehörenden Mikroorganismen Arthrobacter nicotianae, Arthrobacter globiformis und Arthrobacter simplex die Verwertung der verfügbaren Lignocellulosemasse beträchtlich erhöhen und die deutliche Verbesserung der Menge und Abmessungen der eßbaren Pilze im Vergleich zum Stand der Technik gestatten.

Gegenstand der Erfindung ist daher ein Verfahren zur Erzeugung von eßbaren Pilzen durch Gären von Materialien pflanzlichen Ursprunges in Gegenwart von Mikroorganismen und Besäen derselben mit dem Myzel von eßbaren Pilzen zur Erzielung einer Pilzkultur, welches dadurch gekennnzeichnet ist, daß die Pilzkultur vor der Differenzierung mit 1 oder mehr der Mikroorganismen Arthrobacter nicotianae, Arthrobacter globiformis und Arthrobacter simplex von der Arthrobactergattung behandelt wird.

Das erfindungsgemäße Verfahren bringt gegenüber dem Stand der Technik den großen technischen Fortschritt mit sich, daß durch die Behandlung der Pilzkultur mit den genannten Mikroorganismen eine starke Erhöhung der Erzeugung und Abmessungen der eßbaren Pilze im Vergleich zu deren Erzeugung nach dem Stand der Technik erzielt wird.

Der Mikroorganismus kann zum Lignocellulosesubstrat während des Besäens mit dem ausgewählten Pilz zusammen mit diesem oder danach oder zum, im allgemeinen durch Gartenerde und/oder Torf gebildeten, Deckboden zugegeben werden.

Anschließend können das Bebrüten und Ändern der Umgebung in herkömmlicher Weise erfolgen.

Der Mikroorganismusstamm Arthrobacter nicotianae ist in "Il Tabacco", Anno LXIII, N. 690, Januar-März 1959, Seite 1 bis 3 (Artikel von Dott. G. Giovannozzi-Sermanni) beschrieben und die Mikroorganismenstämme Arthrobacter globiformis und Arthrobacter simplex sind in ACTINOMYCETES AND RELATED ORGANISMS, PART 17, Seite 620 bis 622 beschrieben.

Vorteilhaft werden als Arthrobacter nicotianae der [1] unter der Bezeichnung Arthrobacter nicotianae ATCC 15 236 bei der AMERICAN TYPE CULTURE COLLECTION (ATCC) hinterlegte, als Arthrobacter globiformis der unter der Bezeichnung Arthrobacter globiformis ATCC 8 010 [2] bei der AMERICAN TYPE CULTURE COLLECTION (ATCC) hinterlegte und als Arthrobacter simplex der unter der Bezeichnung Arthrobacter simplex ATCC 6 946 [3] bei der AMERICAN TYPE CULTURE COLLECTION (ATCC) hinterlegte verwendet.

Nach einer zweckmäßigen Ausführungsform der Erfindung wird die Behandlung der Pilzkultur mit einer von einer Kultur von Arthrobacter nicotianae, Arthrobacter globiformis und/oder Arthrobacter simplex herstammenden zentrifugierten Mikroorganismuspaste, insbesondere in Suspension in destilliertem Wasser oder physiologischer Salzlösung, und/oder mit einem von der Kultur selbst herstammenden sterilisierten Filtrat durchgeführt.

Berichtigung beantragt mit Schreiben vom 11.03.80, eingegangen am 11.03.80.

[1] Tag der Hinterlegung : 22.10. 1963
[2] Tag der Hinterlegung : 15.03. 1941
[3] Tag der Hinterlegung : 18.07. 1938

0013916

Die Mikroorganismuspaste kann vorteilhaft eine solche, welche durch Sterilisieren eines Nährbodens, vorzugsweise aus Knop'scher Lösung mit einem Zusatz von 1 Gew.-% Saccharose, in einem Autoklaven, Impfen mit dem Mikroorganismus, Drehen auf einem Drehtisch, vorzugsweise bei 30°C, und Zentrifugieren, vorzugsweise mit 5 000 Umdrehungen/Minute, erhalten worden ist.

Bevorzugt wird die Suspension der zentrifugierten Mikroorganismuspaste in solcher Menge zur Pilzkultur zugegeben, daß 1 bis 10 g Mikroorganismuspaste je Doppelzentner Pilzkultur vorliegen.

Vorteilhaft kann als Suspension der Mikroorganismuspaste eine solche mit einem Zusatz der Mikro- beziehungsweise Makroelemente Stickstoff in Form von Nitraten und/oder Ammoniak, Schwefel, Phosphor, Lithium, Magnesium, Mangan, Kupfer, Molybdän und/oder Kobalt verwendet werden.

Die Erfindung wird an Hand der folgenden Beispiele näher erläutert.

## Beispiel 1

Es wurde mit Stroh vermischter Pferdemist gegoren und pasteurisiert (F. C. Atkins, "Guide to mushroom growing") und dann mit Samen von Agaricus bisporus HAUSER 32A besät und in Holzkästen eingebracht.

Ferner wurden 2 500 cm$^3$ Nährboden, bestehend aus Knop'scher Lösung mit einem Zusatz von 1 Gew.-% Saccharose, in 5 l Kolben eingebracht. Diese Kolben wurden in einem Autoklaven sterilisiert, mit Arthrobacter nicotianae geimpft

0013916

und 48 Stunden lang auf einem Drehtisch bei 30°C gedreht.
Die so erhaltene Bakterienkultur wurde mit 5 000 g/Minute
zentrifugiert und dieses Zentrifugat, bestehend aus der
Mikroorganismuspaste, wurde in destilliertem Wasser
suspendiert und diese Suspension wurde auf die in den Holzkästen befindliche Saatschicht gesprüht, und zwar in solcher
Menge, daß 1,5 g Mikroorganismuspaste/Doppelzentner Saatschicht vorlagen. Es wurde 3 Wochen lang bei 26°C und einer
relativen Feuchte von 95% bebrütet und dann wurde das Lignocellulosesubstrat mit Gartenerde und Torf bedeckt und die
Kästen wurden in Räume mit einer Temperatur von 16°C und
einer relativen Feuchte von 90% eingebracht. Die erhaltenen
Ergebnisse sind zusammen mit denen, welche mit einer nicht
mit Arthrobacter nicotianae behandelten Saatschicht als
Vergleichsversuch erhalten wurden, in der folgenden Tabelle 1
zusammengestellt.

- 7 -

## Tabelle 1

| Verfahren | kg geerntete Pilze/Doppelzentner Saatschicht | | | | |
|---|---|---|---|---|---|
| | 1-ste Ernte | 2-te Ernte | 3-te Ernte | 4-te Ernte | Summe der 1-sten bis 4-ten Ernten |
| Erfindungsgemäße Behandlung mit Arthrobacter nicotianae | 11,0 | 9,08 | 7,50 | 4,00 | 31,58 |
| Ohne erfindungsgemäße Behandlung mit einem Mikroorganismus [Vergleichsversuch] | 7,24 | 6,04 | 4,00 | 1,90 | 19,18 |

Tabelle 2

| Verfahren | kg geerntete Pilze/Doppelzentner Saatschicht | | | | |
|---|---|---|---|---|---|
| | 1-ste Ernte | 2-te Ernte | 3-te Ernte | 4-te Ernte | Summe der 1-sten bis 4-ten Ernte |
| Erfindungsgemäße Behandlung mit Arthrobacter nicotianae | 14,20 | 9,90 | 4,00 | 1,30 | 29,40 |
| Ohne erfindungsgemäße Behandlung mit einem Mikroorganismus [Vergleichsversuch] | 10,00 | 8,00 | 3,00 | 0,80 | 21,80 |

- 10 -

0013916

Aus der vorstehenden Tabelle 2 geht her... , daß die gesamte Pilzerzeugung bei der erfindungsgemäßen Behandlung gegenüber der beim Vergleichsversuch um 34,9% erhöht war.

Beispiel 3

Es wurde mit Stroh vermischter Hühnermist gegoren, ...ass... mit Calciumsulfat versetzt, pasteurisiert und ... ...it Agaricus bisporus besä... und in durchlöcherte Poly-...thylensäcke eingebracht.

...rner wurden in 5 l Kolben ... 500 cm$^3$ eines Nährbodens ...r f...genden Zusammensetzung eingebracht.

| | | |
|---|---|---|
| Glucose | 1 | Gew.-% |
| ...epton | 1 | Gew.-% |
| Fleischextrakt | 1 | Gew.-% |
| Natriumchlorid | 0,5 | Gew.-% |
| ...ellwasser zur Ergänzung zu | 100 | Gew.-% |
| ...H-Wert | ... 7,2 | ...richt... |

...e ... ...en wurden in einem ...... ster...isiert, ...
...thr...ter globiformis beimpft und 18 Stunden lang ...
...ne... ...risch bei 29°C ge.... Die ... erhaltene
...kt...kultur wurde mit ... ... ... ...
...s ... ...ingat wurde in ... ... ... ...
...d ... ...e Suspension wurde ... ... ... Polyäthylen...
...thy... ...e Saatschicht in ... ... ... gespült. ...
,5 g ...kroorganismenpaste/...g... ... ... ... ...
...agen. Es wurde 20 Tage lang ... ... ... ...

Feuchte von 95% bebrütet und die Lignocellulosemasse wurde mit Erde und Torf bedeckt und die Säcke wurden in eine Umgebung mit einer Temperatur von 14$^{o}$C und einer relativen Feuchte von 80% gebracht.

Die erhaltenen Ergebnisse sind zusammen mit denen, welche mit einer nicht mit Arthrobacter globiformis behandelten Saatschicht als Vergleichsversuch erhalten wurden, in der folgenden Tabelle 3 zusammengestellt.

Tabelle 3

| Verfahren | kg geerntete Pilze/Doppelzentner Saatschicht | | | | |
|---|---|---|---|---|---|
| | 1-ste Ernte | 2-te Ernte | 3-te Ernte | 4-te Ernte | Summe der 1-sten bis 4-ten Ernten |
| Erfindungsgemäße Behandlung mit Arthrobacter globiformis | 7,25 | 7,30 | 4,15 | 2,20 | 20,90 |
| Ohne erfindungsgemäße Behandlung mit einem Mikroorganismus [Vergleichsversuch] | 6,12 | 5,50 | 3,10 | 1,50 | 16,22 |

- 13 -

Aus der vorstehenden Tabelle 3 geht hervor, daß die gesamte Pilzerzeugung bei der erfindungsgemäßen Behandlung gegenüber der beim Vergleichsversuch um 29% erhöht war.


### Beispiel 4

Es wurde eine passend zerriebene Mischung aus 12,5 kg Stroh und 12,5 kg Maisstrünke (von den Körnern befreite Maiskolben) zu einem Feuchtigkeitsgehalt von 80% befeuchtet, im Dampf pasteurisiert, in durchlöcherte Polyäthylensäcke eingebracht und mit Samen von Pleurotus ostreatus Somycel 3004 besät und gleichzeitig mit einer Suspension einer zentrifugierten Mikroorganismuspaste von Arthrobacter nicotianae in destilliertem Wasser in solcher Menge besprüht, daß 2 g Mikroorganismuspaste/Doppelzentner Saatschicht vorlagen. Die Polyäthylenhülle wurde nach einem Bebrütungszeitraum von 30 Tagen bei 25°C entfernt und die Temperatur wurde auf 15°C und die relative Feuchte auf 90% gebracht. Es wurde auch ein Vergleichsversuch mit einer nicht mit Arthrobacter nicotianae behandelten Saatschicht als Vergleichsmaterial durchgeführt.

Während einer Ernte von 2 Monaten wurden bei der erfindungsgemäßen Behandlung 11,9 kg Pilze/Doppelzentner Saatschicht und beim Vergleichsversuch 7,30 kg Pilze/Doppelzentner Saatschicht erhalten. Somit wurde bei der erfindungsgemäßen Erzeugung eine Pilzernteerhöhung von etwa 63% gegenüber der Erzeugung nach dem Stand der Technik erzielt.


Patentansprüche

0013916

## Patentansprüche

1.) Verfahren zur Erzeugung von eßbaren Pilzen durch
Gären von Material[...] pflanzlichen Ursprungs in
Gegenwart von Mikroorganismen und B[...]
mit dem Myzel von eßbaren Pilzen [...]
Pilzkultur, dadurch ge[...], daß man die [...]
kultur vor der Differenzierung mit 1 oder mehr [...]
Mikroorganismen Arthrobacter [...],
Arthrobacter globiformis und Arthrobacter [...]
von der Arthrobacter [...] behandelt.

Verfahren nach Anspruch [...] dadurch gekennzeichnet
daß man die Behandlung der Pilzkultur mit einer [...]
einer Kultur von Arthrobacter [...],
Arthrobacter globiformis und/oder Arthrobacter
[...]plex be[...]
[...], insbesondere [...]
[...]asser oder physi[...]
[...]
[...] Filtrat durch[...]

[...]fahren nach Anspruch [...]
[...], daß man die [...]
[...]organismen [...]
[...], daß [...]
Doppelzentner Filtrat [...]

Verfahren nach [...] dadurch gekennzeichnet
[...]
[...] solche [...] von Stickstoff
Ammoniak, Schwefel, [...], Kohlen, Magnes[...]
Mangan, Kupfer, Kobalt, [...] verwen[...]

**0013916**

Nummer der Anmeldung

**EP 80 10 0130**

## Europäisches Patentamt

## EUROPÄISCHER RECHERCHENBERICHT

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | A 01 G 1/04 |
| A | <u>DE - A - 2 207 409</u> (LELLEY) ---- | 1 | |

**RECHERCHIERTE SACHGEBIETE (Int. Cl. 3)**

A 01 G 1/04

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| | | |
|---|---|---|
| Der vorliegende Recherchenbericht wurde für alle Patentansprüche erstellt. | | |
| Recherchenort Den Haag | Abschlußdatum der Recherche 21-04-1980 | Prüfer HERYGERS |

EPA form 1503.1  06.78